# EUROPEAN PATENT APPLICATION

(11) **EP 4 764 464 A1**
(43) Date of publication of application: **24.06.2026**
(21) Application number: 24895460.4
(22) Date of filing: 22.05.2024
(51) Int. Cl.: G01N 21/88

(54) **POLE INSPECTION DEVICE AND INSPECTION METHOD**

(30) Priority: 01.12.2023 CN 202311649224
(71) Applicant: Contemporary Amperex Technology Co., Limited, Ningde, Fujian 352100 (CN)
(72) Inventor: WANG, Pengju, Ningde, Fujian 352100 (CN); HUANG, Yunlong, Ningde, Fujian 352100 (CN); WENG, Luying, Ningde, Fujian 352100 (CN); CHEN, Qizhi, Ningde, Fujian 352100 (CN)
(74) Representative: Kraus & Lederer PartGmbB
(86) International application number: PCT/CN2024/094757
(87) International publication number: WO 2025/112350

(57) **Abstract**

A pole inspection device and inspection method. The pole inspection device (100) comprises image collection devices (10), a first light source, and a second light source; the image collection devices (10) are movably arranged and have a first position where an extreme pole (200) is inspected and a second position where a minimalistic pole (400) is inspected; the first light source is provided on one side of the image collection devices (10) and is configured to emit first light towards at least one side surface of the extreme pole (200) in the first position of the image collection devices (10); the second light source is configured to be arranged above the image collection devices (10) and surrounds the minimalistic pole (400); and the second light source is configured to emit second light towards the minimalistic pole (400) in the second position of the image collection devices (10).

## Description

The present application claims priority to Chinese Patent Application No. 202311649224.0 filed on December 1, 2023, which is incorporated herein by reference in its entirety.

### TECHNICAL FIELD

The present application relates to the technical field of battery testing, and in particular, to a post terminal detection apparatus and a detection method thereof.

### BACKGROUND

In the production process of lithium batteries, it is necessary to perform basic quality inspection on the batteries to improve the product yield. Taking the post terminal of batteries as an example, it is necessary to perform an appearance inspection on the peripheral side surface of the post terminal, mainly to inspect the presence of defects such as plastic scalds, scratches, damages and metal exposure, and post terminal burrs. However, the current detection apparatuses for post terminal appearance can only detect one post terminal type, leading to limited applicability.

### SUMMARY

The primary objective of the present application is to provide a post terminal detection apparatus, so as to improve the applicability of the post terminal detection apparatus and save space.

In order to achieve the above objective, the post terminal detection apparatus provided in the present application includes:
an image acquisition apparatus, where the image acquisition apparatus is movably arranged and provided with a first position for detecting the limit post terminal and a second position for detecting the simple post terminal;
a first light source, where the first light source is arranged on one side of the image acquisition apparatus and configured to emit light toward at least one side surface of the post terminal, such that the light enters the image acquisition apparatus through regular reflection; and
a second light source, where the second light source is configured to be arranged above the image acquisition apparatus and arranged around the peripheral side of the simple post terminal and configured to emit a second light beam toward the simple post terminal when the image acquisition apparatus is located at the second position.

In the above post terminal detection apparatus, by the arrangement of the first light source and the second light source at the same station and the movable arrangement of the image acquisition apparatus, the position of the image acquisition apparatus can be adjusted for different post terminals. For example, to acquire an image of a limit post terminal, the first light source is located on one side of the image acquisition apparatus and configured to provide detection light for the image acquisition apparatus to improve the acquisition effect. Here, the image acquisition apparatus may detect different types of post terminals separately, thereby simplifying the structure and saving space.

In one embodiment of the present application, the first light source is a strip-shaped light source, and the limit post terminal includes four side surfaces connected in sequence.

The number of the image acquisition apparatuses is at least two, at least two of the image acquisition apparatuses are arranged at intervals and separately located at vertexes of the limit post terminal, and each of the image acquisition apparatuses correspondingly acquires an image of one side surface of the limit post terminal; an included angle is provided between the projection of the strip-shaped light source on a horizontal plane and the side surface of the limit post terminal, and the strip-shaped light source is configured to provide detection light for at least two of the image acquisition apparatuses.

Here, at least two image acquisition apparatuses are provided, and at least two side surfaces of the post terminal can be detected simultaneously, thereby improving the detection efficiency for the post terminal and helping achieve a flyby photographing effect. Meanwhile, the strip-shaped light source has high emission brightness, and all the emitted light can enter the image acquisition apparatus through regular reflection, which can further improve the exposure effect and highlight defects such as metal burrs, scratches, or scalds, thereby improving the detection accuracy; and the strip-shaped light source can match the dimensions of the post terminal, thereby reducing material costs.

In one embodiment of the present application, two strip-shaped light sources are provided, and the two strip-shaped light sources are separately located on two opposite sides of the limit post terminal. The number of the image acquisition apparatuses is four, the image acquisition apparatuses are arranged in pairs separately located at two vertexes of the limit post terminal, and emitted light of each of the strip-shaped light sources enters two of the image acquisition apparatuses through regular reflection.

By the arrangement of the two strip-shaped light sources and the four image acquisition apparatuses, all side surfaces of the limit post terminal can be detected simultaneously, which can further improve the flyby photographing effect.

In one embodiment of the present application, the centers of the two strip-shaped light sources, the central axes of the four image acquisition apparatuses, and the center of the limit post terminal in the vertical direction are on the same horizontal plane.

The above arrangement can improve the utilization rate of the strip-shaped light source and ensure that most of the light can enter the image acquisition apparatus through regular reflection, thus improving the detection effect.

In one embodiment of the present application, a first included angle is provided between the normal of a surface of the strip-shaped light source and the normal of a side surface of the limit post terminal, and the first included angle is 28° ± 5°;

and/or, the end of the strip-shaped light source proximal to a movement axis of the limit post terminal is set as a reference end, and the distance between the reference end and the movement axis of the limit post terminal is 60 mm ± 5 mm.

Here, the orientation of the strip-shaped light source can ensure the provision of detection light for two image acquisition apparatuses, thereby saving material costs.

The distance between the strip-shaped light source and the limit post terminal can improve the utilization rate of the light source and ensure the brightness of the detection light.

In one embodiment of the present application, the second light source is an annular light source and is provided with at least two brightness channels; the number of the image acquisition apparatuses is at least two, and at least two of the image acquisition apparatuses are evenly arranged at intervals around the peripheral side of the simple post terminal; an included angle is provided between the projection of the central axis of each of the image acquisition apparatuses on a vertical plane and a side surface of the simple post terminal.

The annular light source can provide better detection light for the image acquisition apparatus, and ensure that each side surface of the post terminal can acquire a better image. Meanwhile, the provision of at least two image acquisition apparatuses can improve the detection efficiency. The arrangement of at least two brightness channels can provide different brightness for different polarities of the simple post terminal for detection, thereby improving the detection effect and saving energy.

In one embodiment of the present application, the range of the distance between a surface of the annular light source facing the simple post terminal and a surface of the simple post terminal facing the annular light source is 45 mm ± 5 mm.

The distance range above can ensure the emission brightness of the light source and improve the image acquisition effect.

In one embodiment of the present application, the range of the distance between a lens of the image acquisition apparatus and the side surface of the simple post terminal is 100 mm ± 10 mm;

and/or, a second included angle is provided between the central axis of the image acquisition apparatus and the side surface of the simple post terminal, and the second included angle is 15° ± 5°.

The distance range of the image acquisition apparatus can ensure a proper angle of view for the image acquisition, so as to expand a detection range for detecting the simple post terminal.

The range of the included angle between the central axis of the image acquisition apparatus and the side surface of the simple post terminal may help with the flexible adjustment of the angle on the basis of meeting the imaging light intensity and thus the change of the field of view according to the detected object.

The present application further provides a detection method of a post terminal detection apparatus. The post terminal detection apparatus includes a first light source, a second light source, and an image acquisition apparatus, and the detection method includes:
conveying a battery at a preset speed;
controlling to detect the type of a post terminal of the battery;
controlling the image acquisition apparatus to switch between a first position and a second position according to the type of the post terminal, then controlling the first light source or the second light source to be turned on for a preset duration, and simultaneously controlling the image acquisition apparatus to acquire a side surface image of the post terminal;
acquiring and identifying the side surface image of the post terminal, configured to give a defect parameter of the side surface image; and
determining a detection result of the post terminal based on the defect parameter of the image.

Here, different light sources are selected according to the type of the post terminal to provide the detection light, and the image acquisition apparatus is arranged at a more accurate position, such that the defect detection of side surfaces of different post terminals can be specifically performed, thereby improving the detection precision and the judgment efficiency.

In one embodiment of the present application, the range of the preset speed is less than or equal to 500 m/s.

A preset speed in the range may be adaptive to the shooting duration of the image acquisition apparatus, so as to achieve the flyby photography.

In one embodiment of the present application, the step of controlling the image acquisition apparatus to switch between the first position and the second position according to the type of the post terminal, then controlling the first light source or the second light source to be turned on for the preset duration, and simultaneously controlling the image acquisition apparatus to acquire the side surface image of the post terminal, includes:
when the post terminal is judged as a limit post terminal, controlling the image acquisition apparatus to move to the first position, controlling the first light source to be turned on for the preset duration, and simultaneously controlling the image acquisition apparatus to acquire the side surface image of the post terminal; and
when the post terminal is judged as a simple post terminal, controlling the image acquisition apparatus to move to the second position, controlling the second light source to be turned on for the preset duration, and simultaneously controlling the image acquisition apparatus to acquire the side surface image of the post terminal.

Here, when the post terminal is a limit post terminal, the first light source is selected to provide the detection light by regular reflection, which can improve the exposure, such that defect features are more obvious, and the detection accuracy is improved. When the post terminal is a simple post terminal, the second light source can provide two different brightness channels for post terminals of different colors, thereby ensuring that each post terminal is provided with more suitable detection light to improve the image acquisition effect.

In one embodiment of the present application, the simple post terminal includes a positive electrode post terminal and a negative electrode post terminal, and the post terminal detection apparatus further includes a light source control member.
the step of when the post terminal is judged as the simple post terminal, controlling the image acquisition apparatus to move to the second position, controlling the second light source to be turned on for the preset duration, and simultaneously controlling the image acquisition apparatus to acquire the side surface image of the post terminal, includes:
when the post terminal is judged as the simple post terminal, controlling the image acquisition apparatus to move to the second position, and detecting the polarity of the simple post terminal;
when the simple post terminal is judged as the positive electrode post terminal, sending an instruction to the light source control member, configured to enable the light source control member to control the second light source to be turned on at a first preset power; and
when the simple post terminal is judged as the negative electrode post terminal, sending an instruction to the light source control member, configured to enable the light source control member to control the second light source to be turned on at a second preset power, where the first preset power is greater than the second preset power.

Since the positive electrode post terminal is black and is insensitive to light, increasing the power of the detection light can provide better brightness to facilitate the image acquisition; as the negative electrode post terminal is yellow and reflects light normally, the second light source may operate at a smaller power to improve the detection precision and reduce the energy consumption.

In one embodiment of the present application, the first preset power is 100 W ± 10 W, and the second preset power is 35 W ± 10 W.

The light source within the power ranges can provide good detection light for the positive electrode post terminal and the negative electrode post terminal, thereby improving the detection effect.

In one embodiment of the present application, the step of acquiring and identifying the side surface image of the post terminal, configured to give the defect parameter of the side surface image, includes:
acquiring the side surface image and segmenting the side surface image, configured to acquire a defective region; and
comparing the defective region according to a defect model, configured to determine the defect parameter, wherein the defect parameter comprises at least one of a defect type, a defect dimension, and a defect grayscale value.

Here, segmenting the image can help obtain the defective region and determine the defect parameters.

In one embodiment of the present application, the step of determining the detection result of the post terminal based on the defect parameters of the image, includes:
comparing a preset defect parameter with the defect parameter of the side surface image;
if consistent, determining the post terminal as unqualified, and removing the battery where the post terminal is located; and
if inconsistent, determining the post terminal as qualified.

Judging whether the post terminal is qualified or unqualified according to the preset defect parameter can improve the judgment efficiency.

### BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other drawings from the structures illustrated in these drawings without creative efforts.
FIG. 1 is a schematic view of a post terminal detection apparatus according to one embodiment of the present application;
FIG. 2 is a top view of the post terminal detection apparatus shown in FIG. 1 with the second light source omitted;
FIG. 3 is a schematic view of a post terminal detection apparatus according to another embodiment of the present application;
FIG. 4 is a front view of the post terminal detection apparatus shown in FIG. 3 with the first light source omitted; and
FIG. 5 is a flowchart of a detection method of a post terminal detection apparatus according to one embodiment of the present application.

### Description of the reference numerals:

| Reference numeral | Name | Reference numeral | Name |
|---|---|---|---|
| 100 | Post terminal detection apparatus | 200 | Limit post terminal |
| 10 | Image acquisition apparatus | 400 | Simple post terminal |
| 30 | Strip-shaped light source | 600 | Battery |
| 50 | Annular light source | | |

The achievement of the objectives, the functional features, and the advantages of the present application will be further illustrated with reference to the drawings.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. Based on the embodiments in the present application, all other embodiments obtained by those of ordinary skill in the art without creative efforts shall fall within the protection scope of the present application.

It should be noted that all directional indications (such as up, down, left, right, front, and rear) involved in the embodiments of the present application are only used for explaining the relative position relationship between the components, the motion situation, and the like under a certain posture (as shown in the drawing), and if the certain posture is changed, the directional indications are changed accordingly.

In the present application, unless otherwise clearly specified and defined, the technical terms "connect", "fix", and the like should be interpreted in their broad senses. For example, unless otherwise clearly defined, "fix" may refer to fixed connection, detachable connection, or integrated connection; mechanical connection or electrical connection; or direct connection or indirect connection via an intermediate, or internal communication between two elements or interaction between two elements. For those of ordinary skill in the art, the specific meanings of the aforementioned terms in the present application may be interpreted according to specific conditions.

In addition, the terms "first", "second", and the like in the present application are used for descriptive purposes only and are not to be construed as indicating or implying relative importance or to implicitly indicate the number of technical features indicated. Thus, a feature defined by "first" or "second" may explicitly or implicitly indicate that at least one such feature is included. In addition, the term "and/or" in the present disclosure includes three parallel solutions. Taking "A and/or B" as an example, it includes solution A, or solution B, or a solution in which both A and B are met. In addition, technical solutions between the embodiments may be combined with each other, but the combination must be based on the premise that it can be implemented by those of ordinary skill in the art. When a combination of technical solutions results in contradiction or cannot be implemented, such a combination of technical solutions should be considered absent and out of the protection scope of the present application.

Batteries mentioned in the art may be classified into disposable batteries and rechargeable batteries according to whether they are rechargeable. Currently, common types of rechargeable batteries include: lead-acid batteries, nickel-hydrogen batteries, and lithium-ion batteries. Lithium-ion batteries are currently widely used in pure electric vehicles and hybrid electric vehicles. Lithium-ion batteries for this purpose have a relatively low capacity and high cost, but have a great output and charging current and a long service life.

The battery described in the embodiments of the present application is a rechargeable battery. The embodiments disclosed in the present application are mainly described below by taking a lithium-ion battery as an example. It will be appreciated that the embodiments disclosed in the present application are applicable to any other suitable type of rechargeable battery. The battery mentioned in the embodiments disclosed in the present application may be directly or indirectly applied to an appropriate device for power supply.

The battery cell disclosed in the embodiments of the present application may be used in, but is not limited to be used in, electric devices such as vehicles, ships, or aircrafts. The power system of the electric device may be composed of the battery cell, the battery, and the like disclosed in the present application. The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

The battery described in the embodiments disclosed in the present application refers to a single physical module including one or more battery cells to provide a predetermined voltage and capacity. The battery cell is a basic unit in a battery, and includes a positive electrode plate, a negative electrode plate, an electrolytic solution, and a separator. The lithium-ion battery cell primarily works by the movement of lithium ions between the positive electrode plate and the negative electrode plate. Battery cells are generally divided into cylindrical battery cells, rectangular parallelepiped battery cells, and pouch battery cells according to the packaging method. The description below is mainly based on a rectangular parallelepiped battery cell. It will be appreciated that the embodiments described below are also applicable in certain respects to a cylindrical battery cell or a pouch battery cell.

After a rectangular parallelepiped battery is manufactured, there may be many problems present on the housing and the post terminals of the battery, such as scratches, recesses, protrusions formed by dirt and impurities, or surface burrs. In order to prevent batteries with serious defects on the post terminals from entering subsequent processes and ensure the production quality and safety performance of the final battery products, it is necessary to perform an appearance inspection on the battery and the post terminals and judge whether there are defects based on the acquired images.

Post terminals mainly include simple post terminals and limit post terminals. A simple post terminal may be square or circular in shape, and a part of the peripheral side of the simple post terminal is covered with plastic. The limit post terminal has a layered structure, with a lower layer made of plastic and an upper layer made of metal. However, the current detection apparatuses for post terminal appearance can only detect one type of post terminal, resulting in low applicability.

Therefore, in order to solve the problem of low applicability in the related art, the present application improves the post terminal detection apparatus. By the combination of a first light source and a second light source and the movable arrangement of image acquisition apparatuses, different types of post terminals can be detected at the same detection position, thereby improving the applicability and saving space.

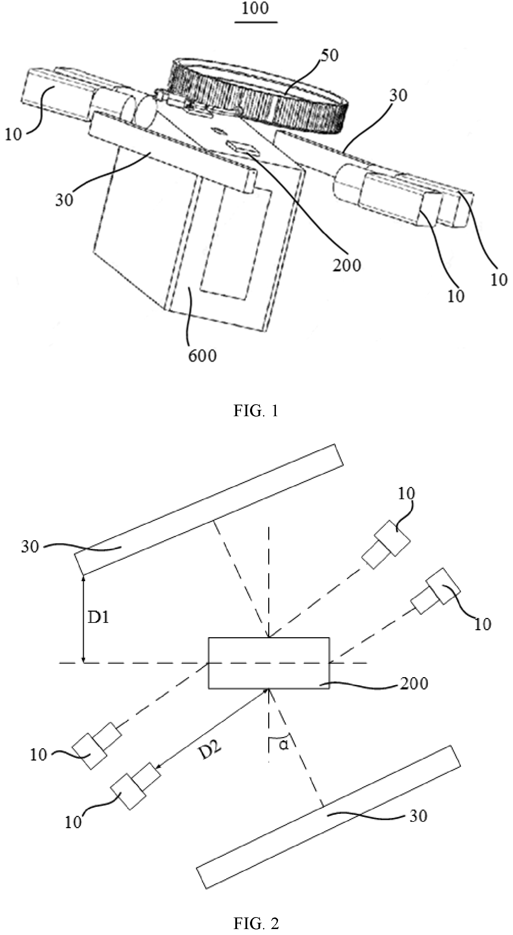

Referring to FIGs. 1 to 3, in one embodiment of the present application, the post terminal detection apparatus 100 includes an image acquisition apparatus 10, a first light source, and a second light source. The image acquisition apparatus 10 is movably arranged and is provided with a first position for detecting the limit post terminal 200 and a second position for detecting the simple post terminal 400. The first light source is arranged on one side of the image acquisition apparatus 10 and configured to emit a first light beam toward at least one side surface of the limit post terminal when the image acquisition apparatus is located at the first position. The second light source is located above the image acquisition apparatus 10, arranged around the peripheral side of the simple post terminal 400, and configured to emit a second light beam toward the simple post terminal when the image acquisition apparatus 10 is located at the second position.

The image acquisition apparatus 10 may be an area array camera, or may be a 3D camera or a 2D camera, which is not limited herein, as long as it has image acquisition functionality. The image acquisition apparatus 10 is located around the peripheral side of the post terminal 200, which means that when the post terminal is located at the detection station, the image acquisition apparatus 10 is located around the peripheral side of the post terminal and is mainly configured to acquire a side surface image of the post terminal. The detection station herein refers to a position where the post terminal 200 of interest is placed according to the imaging distance and the field of view of the image acquisition apparatus 10. The image acquisition apparatus 10 may be movably arranged, that is, the relative positions and orientations of the lens center of the image acquisition apparatus and the center of the post terminal may be changed. There may be a plurality of image acquisition apparatuses 10 arranged around the peripheral side of the limit post terminal 200; alternatively, there may be one image acquisition apparatus configured to be movable, so as to detect each side surface of the limit post terminal 200, which is not limited herein.

The first light source and the second light source are configured to provide detection light for the image acquisition apparatus 10 to improve the acquisition effect. The first light source is configured as a light source that emits the first light beam when the image acquisition apparatus 10 is located at the first position, so as to assist the image acquisition apparatus 10 in acquiring the image of the limit post terminal, thereby improving the imaging quality of the acquired image. The detection light may be white light. The first light source is arranged on one side of the image acquisition apparatus 10. The first light source may be a backlight source provided with a plurality of lamp beads arranged in a matrix, or may be a strip-shaped light source 30, coaxial light sources, or the like, which is not limited herein, as long as the plurality of lamp beads are within the same plane and emit light in the same direction.

The second light source is located above the detection station, that is, above the simple post terminal 400, and is configured to assist in the image acquisition of the side surface of the simple post terminal 400. The simple post terminal 400 is a metal structure covered with plastic, such that the image acquisition apparatus 10 mainly detects defects on the surface of the plastic. The cross section of the simple post terminal 400 is generally circular, such that the second light source is arranged around the peripheral side of the simple post terminal 400, thereby providing detection light at various positions for the simple post terminal 400.

The second light source and the first light source are independently arranged but are both located at the same detection station. The movable arrangement of the image acquisition apparatus 10 enables the first light source and the second light source to share the same set of image acquisition apparatus 10. In this way, the image acquisition apparatus 10 can adjust the position for different post terminals and, by using the first light source or the second light source correspondingly, detect the different types of post terminals. The two light sources can be spatially combined, thereby simplifying the structure and saving the station and space.

At present, a detection apparatus for a limit post terminal generally uses an annular light source, and the light emitted by the annular light source may be diffusely reflected, such that the light cannot be accurately incident into the image acquisition apparatus. In particular, some defects, such as small protrusions or recesses, cannot be clearly highlighted in the image, thereby deteriorating the imaging quality, causing inaccurate detections, and seriously affecting the production quality and safety performance of the final battery products.

In one embodiment of the present application, the first light source is a strip-shaped light source 30, and the limit post terminal 200 includes four side surfaces connected in sequence; the number of the image acquisition apparatuses 10 is at least two, at least two of the image acquisition apparatuses 10 are arranged at intervals and separately located at vertexes of the limit post terminal 200, and each of the image acquisition apparatuses 10 correspondingly acquires an image of one side surface of the limit post terminal 200; an included angle is provided between the projection of the strip-shaped light source 30 on a horizontal plane and the side surface of the limit post terminal 200, such that the strip-shaped light source 30 provides detection light for at least two of the image acquisition apparatuses 10.

The strip-shaped light source 30 has high emission brightness, and is generally a high-brightness strip-shaped light source 30 consisting of a high-density in-line LED array suitable for large-format dimension detection. The illumination angle may also be freely adjusted. The high-brightness strip-shaped light source 30 has high illumination uniformity, high brightness, good heat dissipation, a long service life, high product stability, simple installation, an adjustable angle, and more flexible application. Here, the first light source is configured as the strip-shaped light source 30 and provides the limit post terminal with light based on the regular reflection principle. The image acquisition apparatus 10 can acquire most of the light of the first light source, which can improve the exposure effect and achieve overexposure, so as to improve the visibility of defects, that is, to make defects such as metal burrs or scratches more obvious, thereby improving the detection efficiency and the detection accuracy. Here, the light based on the regular reflection principle means that all the emitted light of the first light source enters the image acquisition apparatus 10 through regular reflection. The characteristics of regular reflection mean that the incident angle and the reflection angle of the light are the same and within the same plane, and the intensity of the incident light is equal to the intensity of the reflected light, such that the exposure of the image acquired by the image acquisition apparatus 10 can be improved. The upper layer of the limit post terminal 200 is made of metal, and the part with a defect will present an obvious dark color, such that defects such as metal burrs, scratches, or scalds are more highlighted, thereby improving the detection accuracy.

It will be appreciated that the limit post terminal 200 is generally a tetragonal cylinder structure with four side surfaces. More specifically, the cross section of the limit post terminal is a rectangle. Here, at least two (for example, two, three, or four) image acquisition apparatuses 10 are provided, and at least two side surfaces of the limit post terminal 200 can be detected simultaneously, thereby improving the detection efficiency for the limit post terminal 200. Meanwhile, the image acquisition apparatus 10 is located at a vertex of the limit post terminal 200, and an included angle is provided between the projection of the strip-shaped light source 30 on a horizontal plane and the side surface of the limit post terminal 200. That is, when the top surface of the limit post terminal 200 faces the vertical direction and the post terminal detection apparatus 100 is projected on a horizontal plane, the image acquisition apparatus 10 and the strip-shaped light source 30 are both arranged at an included angle with the side surface of the post terminal, and the emitted light and the received light may form a symmetrical structure around the perpendicular bisector of the side surface of the limit post terminal 200, which is more conducive to the regular reflection of all the light emitted by the strip-shaped light source 30 into the image acquisition apparatus 10 through the side surface of the limit post terminal 200, so as to further improve the detection accuracy by improving the exposure of the image through high brightness.

In addition, the strip-shaped light source 30 is long enough to cover the image acquisition apparatuses 10 located at two vertexes, and the light emitted by the strip-shaped light source enters the two image acquisition apparatuses 10 through regular reflection from two adjacent side surfaces of the limit post terminal 200, thereby simplifying the structure and facilitating the assembly.

Referring to FIGs. 1 and 2, in one embodiment of the present application, two strip-shaped light sources 30 are provided, and the two strip-shaped light sources 30 are separately located on two opposite sides of the limit post terminal 200. The number of the image acquisition apparatuses 10 is four, the image acquisition apparatuses 10 are arranged in pairs separately located at two vertexes of the limit post terminal 200, and emitted light of each of the strip-shaped light sources 30 enters two of the image acquisition apparatuses 10 through regular reflection.

In this example, on the basis that one strip-shaped light source 30 correspondingly provides the detection light for two image acquisition apparatuses 10, two strip-shaped light sources 30 and four image acquisition apparatuses 10 are provided. The two strip-shaped light sources 30 are separately located on two opposite sides of the limit post terminal 200, or at two vertexes of the limit post terminal 200. The four image acquisition apparatuses 10 are arranged in pairs separately located on the other two vertexes of the limit post terminal 200. The angle of view of each image acquisition apparatus 10 is configured to be greater than 90 degrees, such that the four side surfaces of the limit post terminal 200 can be detected at the same time, thereby achieving comprehensive detection and improving the detection efficiency. In other examples, four strip-shaped light sources 30 may be provided, and one strip-shaped light source 30 is provided corresponding to one image acquisition apparatus 10, so as to conform to the position arrangement of regular reflection.

In one example, when the limit post terminal 200 of interest is conveyed by a conveying apparatus, when the limit post terminal 200 reaches the detection station, the side surface images in all directions of the limit post terminal may be acquired by the image acquisition apparatus 10 based on the conveying speed. Due to the improvement of the exposure, various defects can be better presented, and the time for the limit post terminal 200 to stay at the detection station can be greatly reduced. In this way, the photography can be conducted in a flying manner. That is, the conveying apparatus keeps the original conveying speed without an interruption during photographing, which can reduce the time spent on detection, maximize the cooperation with the takt time, and improve the production efficiency. In addition, frequent startup and interruption of the conveying apparatus can also be avoided, which is conducive to prolonging the service life.

In one embodiment of the present application, the centers of the two strip-shaped light sources 30, the central axes of the four image acquisition apparatuses 10, and the center of the limit post terminal 200 in the vertical direction are on the same horizontal plane.

In this example, the centers of the strip-shaped light sources 30, the four image acquisition apparatuses 10, and the limit post terminal 200 in the vertical direction are all located on the same horizontal plane. Here, the center of the strip-shaped light source 30 refers to the center of its geometric shape in the vertical direction, and the center of the image acquisition apparatus 10 in the vertical direction refers to the axial position where the lens of the image acquisition apparatus is located. Due to the divergence of light, the arrangement of the structure allows most of the light of the strip-shaped light source 30 to be emitted to a side surface of the limit post terminal 200, and most of the light can enter the image acquisition apparatus 10 through regular reflection, thereby improving the utilization rate of the strip-shaped light source 30 and improving the detection effect.

Referring to FIG. 2, in one embodiment of the present application, a first included angle α is provided between the normal of a surface of the strip-shaped light source 30 and the normal of a side surface of the limit post terminal 200, and the first included angle α is 28° ± 5°;
and/or, the end of the strip-shaped light source 30 proximal to a movement axis of the limit post terminal 200 is set as a reference end, and the distance D1 between the reference end and the movement axis of the limit post terminal 200 is 60 mm ± 5 mm.

Here, the normal of the surface of the strip-shaped light source 30 refers to a straight line perpendicular to the surface of the strip-shaped light source 30 and passing through the center of the strip-shaped light source 30, and the normal of one side surface of the limit post terminal 200 refers to a straight line perpendicular to the side surface of the limit post terminal 200 and passing through the center of the limit post terminal 200. The two normals define an included angle, that is, the two normals are arranged at the first included angle α within the same horizontal plane, and the first included angle may be 28° ± 5°, for example, 23°, 25°, 28°, 30°, 32°, or the like. The angle setting can ensure the provision of detection light for two image acquisition apparatuses 10, thereby saving material costs. Here, the included angles of the two strip-shaped light sources 30 relative to the side surface of the limit post terminal 200 may be identical or different, which is not limited herein. The included angle between the image acquisition apparatus 10 and the side surface of the limit post terminal 200 may be configured according to the first included angle above, such that the image acquisition apparatus 10 may receive the light from the strip-shaped light source 30 through regular reflection. For example, the included angle between the lens axis of one of the image acquisition apparatuses 10 and the normal of one side surface of the limit post terminal 200 is 35° ± 5°, and the included angle between the lens axis of the other image acquisition apparatus 10 and the normal of the other side of the limit post terminal 200 is 43° ± 5°. In addition, the angle and position of the image acquisition apparatus 10 may also be finely adjusted according to the imaging requirements, thereby improving the imaging quality.

On the basis of defining or not defining the included angle between the strip-shaped light source 30 and a side surface of the limit post terminal 200, the strip-shaped light source 30 provided with the end proximal to the movement axis of the limit post terminal 200 is defined as the reference end, the distance between the reference end and the movement axis of the limit post terminal 200 is D1, and the value of D1 is 60 mm ± 5 mm, for example, 55 mm, 57 mm, 60 mm, 62 mm, 63 mm, 65 mm, or the like, which is adjustable according to the dimensions of the post terminal of interest, thereby improving the brightness of the detection light provided by the strip-shaped light source 30, and further improving the imaging quality.

The distance from the lens of the image acquisition apparatus 10 to the center of a side surface of the detected limit post terminal 200 can be adjusted, the distance between the two is D2, and the range of D2 is 100 mm ± 10 mm, for example, 95 mm, 97 mm, 100 mm, 102 mm, 105 mm, or the like, which can satisfy the angle of view for photographing and the detection precision.

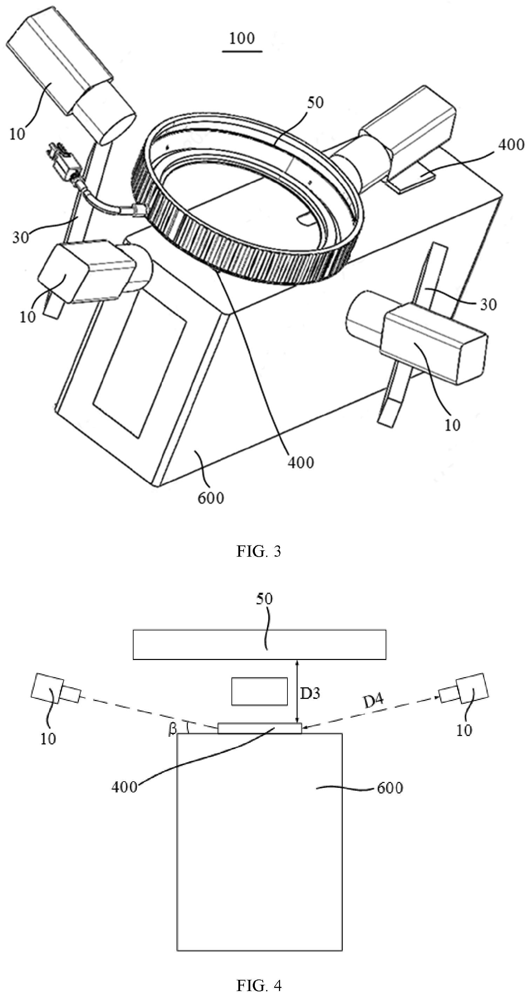

Referring to FIGs. 3 and 4, in one embodiment of the present application, the second light source is an annular light source 50 and is provided with at least two brightness channels; the number of the image acquisition apparatuses 10 is at least two, and at least two of the image acquisition apparatuses 10 are evenly arranged at intervals around the peripheral side of the simple post terminal 400; an included angle is provided between the projection of the central axis of each of the image acquisition apparatuses 10 on a vertical plane and a side surface of the simple post terminal 400.

In this example, the second light source is the annular light source 50 that may uniformly emit detection light toward the peripheral side of the simple post terminal 400 to provide more uniform detection light for the image acquisition apparatus 10, so as to obtain better acquired images of each side surface of the simple post terminal 400. In other examples, the second light source may also be at least three strip-shaped light sources 30, and the at least three strip-shaped light sources 30 are annularly arranged above the simple post terminal 400 at intervals to replace the function of the annular light source 50. Meanwhile, at least two image acquisition apparatuses 10 are provided, and the at least two image acquisition apparatuses are evenly arranged at intervals around the peripheral side of the simple post terminal 400, which can be configured according to the number of the image acquisition apparatuses 10 and the range of the angle of view of each image acquisition apparatus 10, such that the side surface images in all directions of the simple post terminal 400 can be acquired at the same time, thereby improving the detection efficiency. For example, four image acquisition apparatuses 10 are provided, and the angle of view of each image acquisition apparatus 10 is 90°, such that the entire peripheral side of the simple post terminal 400 can be covered to achieve comprehensive detection. The arrangement of the structure is also conducive to flyby photographing, that is, the detection of the simple post terminal 400 can be achieved without shutdown.

Because the colors of the positive and negative electrode post terminals of the simple post terminal 400 are different, the requirements for the detection light are also different. Here, the second light source is configured with at least two brightness channels, that is, configured with two brightness values, which may be switched by adjusting the voltage or power of the second light source to provide corresponding brightness for post terminals of different polarities, thereby improving the flexibility of brightness adjustment of the light source during shooting, improving the brightness of the side surface of the simple post terminal 400, and improving the contrast of defects in imaging, and specifically, improving the detection rates of the defects such as plastic scalds, damages, and scratches on the simple post terminal 400.

In one embodiment of the present application, the range of the distance between a surface of the annular light source 50 facing the simple post terminal 400 and a surface of the simple post terminal 400 facing the annular light source 50 is 45 mm ± 5 mm.

The distance range above can ensure the emission brightness of the light source and improve the image acquisition effect. In one example, an end surface of the annular light source 50 is arranged in parallel with a surface of the simple post terminal 400, the distance between the two surfaces is D3, and the value of D3 is 40 mm, 42 mm, 45 mm, 47 mm, 50 mm, or the like.

Referring to FIG. 4, in one embodiment of the present application, the distance between a lens of the image acquisition apparatus 10 and the side surface of the simple post terminal 400 is D4, and the range of D4 is 100 mm ± 10 mm;
and/or, a second included angle is provided between the central axis of the image acquisition apparatus 10 and the side surface of the simple post terminal 400, and the second included angle is 15° ± 5°.

The distance from the lens of the image acquisition apparatus 10 to the center of a side surface of the detected limit post terminal 200 can be adjusted, the distance between the two is D4, and the range of D4 is 100 mm ± 10 mm, for example, 95 mm, 97 mm, 100 mm, 102 mm, 105 mm, or the like, which can satisfy the angle of view for photographing and the detection precision.

On the basis of defining or not defining the distance between the image acquisition apparatus 10 and the side surface of the simple post terminal 400, a second included angle β is provided between the central axis of the image acquisition apparatus and the side surface of the simple post terminal 400, and the range of the β value is 15° ± 5°, such as 10°, 12°, 15°, 17°, 20°, or the like, which may help with the flexible adjustment of the angle on the basis of meeting the imaging light intensity and thus the change of the field of view according to the detected object, and facilitate the adjustment of the optimal imaging quality according to the defect features.

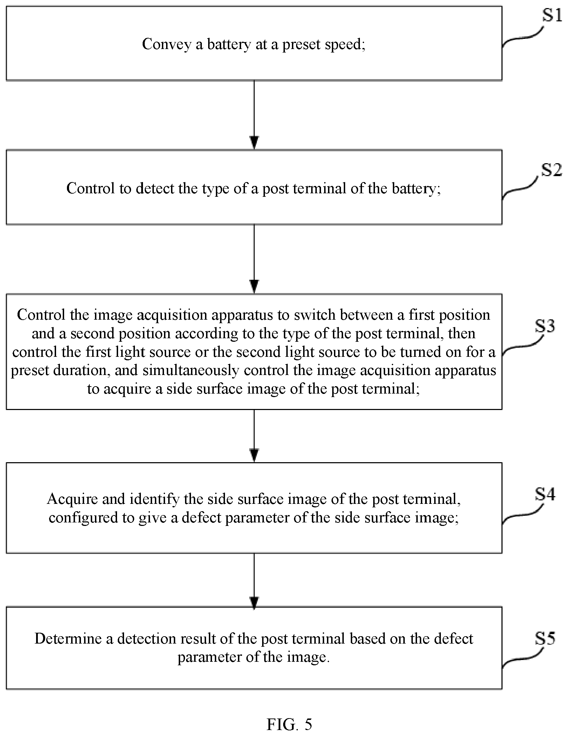

Referring to FIG. 5, the present application further provides a detection method of a post terminal detection apparatus 100. The post terminal detection apparatus 100 includes a first light source, a second light source, and an image acquisition apparatus, and the detection method includes:
S1: conveying a battery 600 at a preset speed;
S2: controlling to detect the type of a post terminal of the battery 600;
S3: controlling the image acquisition apparatus 10 to switch between a first position and a second position according to the type of the post terminal, then controlling the first light source or the second light source to be turned on for a preset duration, and simultaneously controlling the image acquisition apparatus 10 to acquire a side surface image of the post terminal;
S4: acquiring and identifying the side surface image of the post terminal to give a defect parameter of the side surface image; and
S5: determining a detection result of the post terminal based on the defect parameter of the image.

The detection method may be acquired by an upper computer. For example, the upper computer serves as a main controller to obtain the image of the post terminal acquired by the image acquisition apparatus 10, analyze and process the image, and judge whether the post terminal is qualified. In step S1, the battery 600 may be conveyed by a conveying apparatus. The battery 600 is placed on the conveying apparatus by a material pickup structure, such as a robotic arm and conveyed to a detection station by the conveying apparatus. The preset speed herein is the operating speed of the conveying apparatus, which can be configured as required to improve the detection efficiency and achieve the flyby photographing effect. The shooting time of the image acquisition apparatus 10 and the exposure time of the first light source and the second light source may be adaptively selected according to the preset speed, so as to achieve the flyby photographing effect. In step S2, a reading mechanism, such as an automatic radio frequency identification apparatus, a bar code scanner, or the like, may be used for controlling to detect the type of the post terminal of the battery 600, which is not limited herein. The judgment is performed according to a template of the post terminal. For example, a simple post terminal 400 is cylindrical or prismatic, and a limit post terminal 200 is prismatic and has an upper-lower layered structure. The reading mechanism reads the information of the battery 600 to acquire the type of the post terminal of the battery 600, so as to determine a solution for detecting the post terminal of the battery 600, thereby improving the detection efficiency. In step S3, after the type of the post terminal is determined, the image acquisition apparatus 10 is controlled to move to the first position or the second position, so as to provide a suitable orientation and distance, and when the post terminal reaches the detection station, the first light source or the second light source is controlled to be turned on for a preset duration. The preset duration may be configured according to the shooting duration of the image acquisition apparatus 10, so as to improve the imaging quality. Meanwhile, the image acquisition apparatus 10 is controlled to acquire images, which is conducive to achieving flyby photography. In other examples, when the post terminals on a production line are of the same type, this step may be omitted.

In step S4, the side surface image of the post terminal may be acquired by a lower computer. For example, an acquisition instruction is sent to the lower computer, and the lower computer sends the received image information sent by the image acquisition apparatus 10 to the upper computer. In other examples, the side surface image of the post terminal may also be directly acquired from the image acquisition apparatus 10. Since most of the defect types of the simple post terminal 400 are plastic defects, and most of the defect types of the limit post terminal 200 are metal defects, the defect parameter of the image may be determined according to a preset corresponding table. The defect parameter includes at least one of a defect type, a defect dimension, and a defect grayscale value. In step S5, finally, the degree of influence of the defect on the quality of the post terminal is judged based on the defect parameter of the image, and the detection result of the post terminal is output. The detection result is divided into Qualified and Unqualified.

The detection method is classified according to different post terminal types, such that the method can be more specific, thereby improving the detection efficiency. Different light sources are selected according to the type of the post terminal to provide the detection light, and the image acquisition apparatus 10 is arranged at a more accurate position, such that the defect detection of side surfaces of different post terminals can be specifically performed, thereby improving the detection precision and the applicability for different types of post terminals.

It will be appreciated that the post terminal detection apparatus 100 may execute the steps of the above method under the control of a lower computer, i.e., a programmable logic controller (PLC). Therefore, the conveying apparatus and the robotic arm, the image acquisition apparatus 10, and the light sources are all electrically connected to the PLC. Certainly, the judgment of the post terminal type may be controlled by an upper computer, and the upper computer is a carrier carrying software that can send instructions to the lower computer and read and process various data. The reading mechanism is electrically connected to the upper computer, and by acquiring a feedback result from the reading mechanism, a detection solution can be sent to the lower computer, such that the control of the lower computer is more specific and accurate. In other examples, the determination of the post terminal type may also be controlled by the lower computer, and the reading mechanism is electrically connected to the lower computer.

In one embodiment of the present application, the range of the preset speed is less than or equal to 500 m/s.

In one example, the preset speed may be 400 m/s, 420 m/s, 450 m/s, 470 m/s, or 500 m/s, and a preset speed in the range may be adaptive to the shooting duration of the image acquisition apparatus 10, so as to achieve the flyby photography.

In one embodiment of the present application, the step of controlling the image acquisition apparatus 10 to switch between the first position and the second position according to the type of the post terminal, then controlling the first light source or the second light source to be turned on for the preset duration, and simultaneously controlling the image acquisition apparatus 10 to acquire the side surface image of the post terminal, includes:
step S31: when the post terminal is judged as a limit post terminal 200, controlling the image acquisition apparatus 10 to move to the first position, controlling the first light source to be turned on for the preset duration, and simultaneously controlling the image acquisition apparatus 10 to acquire the side surface image of the post terminal; and
step S32: when the post terminal is judged as a simple post terminal 400, controlling the image acquisition apparatus 10 to move to the second position, controlling the second light source to be turned on for the preset duration, and simultaneously controlling the image acquisition apparatus 10 to acquire the side surface image of the post terminal.

Here, in step S31, when it is identified that the post terminal is the limit post terminal 200, the identification result may be sent to the upper computer, the upper computer sends the detection solution to the lower computer, and the lower computer controls the driving structure of the image acquisition apparatus 10 to perform positional adjustment to position the image acquisition apparatus 10 at the first position. When it is detected that the limit post terminal 200 is located at the detection position, because the limit post terminal 200 is mainly detected for defects of the metal part, such as metal burrs and the like, the first light source is controlled to be turned on to provide detection light that satisfies the regular reflection, such that the exposure can be improved. The structure of a position with metal burrs is dark, and a high exposure makes the periphery of the structure bright white. In this way, the image contrast is increased to make the defect features more obvious and thus improve the detection accuracy. The preset duration herein may be configured according to the shooting duration of the image acquisition apparatus 10 to meet the image effect. In step S32, when it is identified that the post terminal is the simple post terminal 400, because the detection of the simple post terminal 400 is focused to the plastic part, the second light source arranged around is more suitable for detecting defects of the simple post terminal 400, such as scratches, scalds, damage, or the like, which can improve the detection precision. The brightness channels mean that the second light source has two light emitting states with different brightness. Because the colors of the two post terminals of the simple post terminal 400 are different, the second light source can provide detection light of the two different brightness channels for the post terminals of different colors, thereby ensuring that each post terminal is provided with detection light of a more suitable brightness to improve the image acquisition effect and the detection precision. The configuration of the preset duration herein may be consistent with the configuration of the preset duration above.

In one embodiment of the present application, the simple post terminal 400 includes a positive electrode post terminal and a negative electrode post terminal, and the post terminal detection apparatus 100 further includes a light source control member; and
the step of when the post terminal is judged as the simple post terminal 400, controlling the image acquisition apparatus 10 to move to the second position, controlling the second light source to be turned on for the preset duration, and simultaneously controlling the image acquisition apparatus 10 to acquire the side surface image of the post terminal, includes:
step S321: when the post terminal is judged as the simple post terminal 400, controlling the image acquisition apparatus 10 to move to the second position, and detecting the polarity of the simple post terminal 400;
step S322: when the simple post terminal 400 is judged as the positive electrode post terminal, sending an instruction to the light source control member to enable the light source control member to control the second light source to be turned on at a first preset power; and
step S323: when the simple post terminal 400 is judged as the negative electrode post terminal, sending an instruction to the light source control member to enable the light source control member to control the second light source to be turned on at a second preset power, where the first preset power is greater than the second preset power.

In step S321, when it is determined that the post terminal is the simple post terminal 400, whether the positive electrode post terminal or the negative electrode post terminal first enters the detection position may be further judged by the identification apparatus. The positive and negative post terminals may be judged by identifying the symbols or marks on peripheral sides of the positive electrode post terminal and the negative electrode post terminal, or by identifying the colors, which is not limited herein. It will be appreciated that since the positive electrode post terminal of the simple post terminal 400 is black and is insensitive to light, increasing the power of the detection light can provide better brightness to facilitate the image acquisition. In step S322, when the positive electrode post terminal of the simple post terminal 400 reaches the detection position, the second light source is turned on at the first preset power, such that the second light source can provide the detection light with high brightness, which significantly increases the background brightness of the positive electrode post terminal and improves the contrast of plastic defects. As the negative electrode post terminal is yellow and reflects light normally, the second light source may operate at a smaller power to improve the detection precision and reduce the energy consumption. Therefore, in step S323, when the negative electrode post terminal of the simple post terminal 400 reaches the detection position, the second light source is turned on at the second preset power, which can satisfy the requirement for the background brightness of the negative electrode post terminal. The adaptation of the optical brightness to different post terminals improves the flexibility of brightness adjustment of the light source during shooting, the brightness of the side surface of the simple post terminal 400, the contrast of defects in imaging, and the detection rates of the defects such as plastic scalds, damages, and scratches on the simple post terminal 400.

In one embodiment of the present application, the first preset power is 100 W ± 10 W, and the second preset power is 35 W ± 10 W.

The first preset power needs to be greater and may be 90 W, 95 W, 100 W, 102 W, 105 W, 110 W, or the like, to improve the brightness of the detection light and improve the contrast of defects. The second preset power is smaller, and may be 25 W, 27 W, 30 W, 32 W, 35 W, 40 W, 45 W, or the like, to meet the required brightness without overexposure. Therefore, the second light source within the power ranges can provide good detection light for the positive electrode post terminal and the negative electrode post terminal, thereby improving the detection effect.

In one embodiment of the present application, the step of acquiring and identifying the side surface image of the post terminal to give the defect parameter of the side surface image, includes:
step S41: acquiring the side surface image and segmenting the side surface image to acquire a defective region; and
step S42: comparing the defective region according to a defect model to determine the defect parameter.

In order to acquire the defect parameter more accurately, the image is first segmented to identify the defect features in the image, such that the defective region of the post terminal can be positioned more quickly. The defective region may be determined in combination with a grayscale value of an image pixel. The defective region is further identified, where a related defect feature is determined and a defect parameter is extracted, including identifying the defect by using a specified classification algorithm, determining the defect type of the defective region, identifying the dimensions of the defective region, for example, a length, a width, or an area, and determining the dimensions, and identifying the grayscale value of the defective region to determine the defect level.

Here, segmenting the image can help obtain the defective region and determine the defect parameters, so as to accurately judge the defects subsequently and improve the detection accuracy.

In one embodiment of the present application, the step of determining the detection result of the post terminal based on the defect parameters of the image, includes:
step S451: comparing a preset defect parameter with the defect parameter of the side surface image;
step S452: if consistent, determining the post terminal as unqualified, and removing the battery 600 where the post terminal is located; and
step S453: if inconsistent, determining the post terminal as qualified.

Judging whether the post terminal is qualified or unqualified according to the preset defect parameter can unify the judgment scale, avoid subjective misjudgment, and improve the judgment efficiency.

In the comparison process, in the simple post terminal 400, if the defect type is metal exposure, it is judged whether the length of the metal exposure is greater than a preset length, for example, a preset length of 0.2 mm. If the length is greater than the preset length, it is determined that the post terminal is unqualified, and otherwise, it is determined that the post terminal is qualified. If the defect type is scald deformation, it is judged whether the deformation is greater than a preset deformation amount, for example, a preset deformation amount of 0.5 mm. If the deformation is greater than the preset deformation amount, it is determined that the post terminal is unqualified, and otherwise, it is determined that the post terminal is qualified. In the limit post terminal 200, if the defect is a metal burr, it is judged whether the width of the metal burr is greater than a preset width and whether the length is greater than a preset length, for example, a preset width of 300 µm and a preset length of 800 µm. If the above preset ranges are met, it is determined that the post terminal is unqualified, and otherwise, it is determined that the post terminal is qualified. When it is determined that the post terminal is unqualified, the result may be transmitted to an execution mechanism, such as a sorting mechanism, so as to remove the unqualified battery 600 and prevent it from entering subsequent processes.

The above description is only embodiments of the present application and is not intended to limit the scope of the present application. Any equivalent structural transformations made based on the content of the specification and the drawings of the present application or any direct/indirect applications in other related technical fields under the spirit of the present application shall all fall within the scope of patent protection of the present application.

## Claims

1. A post terminal detection apparatus, wherein the post terminal detection apparatus comprises:
an image acquisition apparatus, wherein the image acquisition apparatus is movably arranged and provided with a first position for detecting a limit post terminal and a second position for detecting a simple post terminal;
a first light source, wherein the first light source is arranged on one side of the image acquisition apparatus and configured to emit a first light beam toward at least one side surface of the limit post terminal when the image acquisition apparatus is located at the first position; and
a second light source, wherein the second light source is configured to be arranged above the image acquisition apparatus and arranged around the peripheral side of the simple post terminal and configured to emit a second light beam toward the simple post terminal when the image acquisition apparatus is located at the second position.

2. The post terminal detection apparatus according to claim 1, wherein the first light source is a strip-shaped light source, and the limit post terminal comprises four side surfaces connected in sequence; and
the number of the image acquisition apparatuses is at least two, at least two of the image acquisition apparatuses are arranged at intervals and separately located at vertexes of the limit post terminal, and each of the image acquisition apparatuses correspondingly acquires an image of one side surface of the limit post terminal; an included angle is provided between the projection of the strip-shaped light source on a horizontal plane and the side surface of the limit post terminal, and the strip-shaped light source is configured to provide detection light for at least two of the image acquisition apparatuses.

3. The post terminal detection apparatus according to claim 2, wherein two strip-shaped light sources are provided, and the two strip-shaped light sources are separately located on two opposite sides of the limit post terminal; the number of the image acquisition apparatuses is four, the image acquisition apparatuses are arranged in pairs separately located at two vertexes of the limit post terminal, and emitted light of each of the strip-shaped light sources enters two of the image acquisition apparatuses through regular reflection.

4. The post terminal detection apparatus according to claim 3, wherein the centers of the two strip-shaped light sources, the central axes of the four image acquisition apparatuses, and the center of the limit post terminal in the vertical direction are on the same horizontal plane.

5. The post terminal detection apparatus according to any one of claims 2 to 4, wherein a first included angle is provided between the normal of a surface of the strip-shaped light source and the normal of a side surface of the limit post terminal, and the first included angle is 28° ± 5°;
and/or, the end of the strip-shaped light source proximal to a movement axis of the limit post terminal is set as a reference end, and the distance between the reference end and the movement axis of the limit post terminal is 60 mm ± 5 mm.

6. The post terminal detection apparatus according to any one of claims 1 to 5, wherein the second light source is an annular light source and is provided with at least two brightness channels; the number of the image acquisition apparatuses is at least two, and at least two of the image acquisition apparatuses are evenly arranged at intervals around the peripheral side of the simple post terminal; an included angle is provided between the projection of the central axis of each of the image acquisition apparatuses on a vertical plane and a side surface of the simple post terminal.

7. The post terminal detection apparatus according to claim 6, wherein the range of the distance between a surface of the annular light source facing the simple post terminal and a surface of the simple post terminal facing the annular light source is 45 mm ± 5 mm.

8. The post terminal detection apparatus according to claim 6, wherein the range of the distance between a lens of the image acquisition apparatus and the side surface of the simple post terminal is 100 mm ± 10 mm;
and/or, a second included angle is provided between the central axis of the image acquisition apparatus and the side surface of the simple post terminal, and the second included angle is 15° ± 5°.

9. A detection method of a post terminal detection apparatus, wherein the post terminal detection apparatus comprises a first light source, a second light source, and an image acquisition apparatus, and the detection method comprises:
conveying a battery at a preset speed;
controlling to detect the type of a post terminal of the battery;
controlling the image acquisition apparatus to switch between a first position and a second position according to the type of the post terminal, then controlling the first light source or the second light source to be turned on for a preset duration, and simultaneously controlling the image acquisition apparatus to acquire a side surface image of the post terminal;
acquiring and identifying the side surface image of the post terminal, configured to give a defect parameter of the side surface image; and
determining a detection result of the post terminal based on the defect parameter of the image.

10. The detection method of the post terminal detection apparatus according to claim 9, wherein the preset speed is less than or equal to 500 m/s.

11. The detection method of the post terminal detection apparatus according to claim 10, wherein the step of controlling the image acquisition apparatus to switch between the first position and the second position according to the type of the post terminal, then controlling the first light source or the second light source to be turned on for the preset duration, and simultaneously controlling the image acquisition apparatus to acquire the side surface image of the post terminal, comprises:
when the post terminal is determined as a limit post terminal, controlling the image acquisition apparatus to move to the first position, controlling the first light source to be turned on for the preset duration, and simultaneously controlling the image acquisition apparatus to acquire the side surface image of the post terminal; and
when the post terminal is determined as a simple post terminal, controlling the image acquisition apparatus to move to the second position, controlling the second light source to be turned on for the preset duration, and simultaneously controlling the image acquisition apparatus to acquire the side surface image of the post terminal.

12. The detection method of the post terminal detection apparatus according to claim 11, wherein the simple post terminal comprises a positive electrode post terminal and a negative electrode post terminal, and the post terminal detection apparatus further comprises a light source control member; and
the step of when the post terminal is determined as the simple post terminal, controlling the image acquisition apparatus to move to the second position, controlling the second light source to be turned on for the preset duration, and simultaneously controlling the image acquisition apparatus to acquire the side surface image of the post terminal, comprises:
when the post terminal is determined as the simple post terminal, controlling the image acquisition apparatus to move to the second position, and detecting the polarity of the simple post terminal;
when the simple post terminal is determined as the positive electrode post terminal, sending an instruction to the light source control member to enable the light source control member to control the second light source to be turned on at a first preset power; and
when the simple post terminal is determined as the negative electrode post terminal, sending an instruction to the light source control member to enable the light source control member to control the second light source to be turned on at a second preset power, wherein the first preset power is greater than the second preset power.

13. The detection method of the post terminal detection apparatus according to claim 12, wherein the first preset power is 100 W ± 10 W, and the second preset power is 35 W ± 10 W.

14. The detection method of the post terminal detection apparatus according to claim 9, wherein the step of acquiring and identifying the side surface image of the post terminal, configured to give the defect parameter of the side surface image, comprises:
acquiring the side surface image and segmenting the side surface image, configured to acquire a defective region; and
comparing the defective region according to a defect model, configured to determine the defect parameter, wherein the defect parameter comprises at least one of a defect type, a defect dimension, and a defect grayscale value.

15. The detection method of the post terminal detection apparatus according to claim 14, wherein the step of determining the detection result of the post terminal based on the defect parameters of the image, comprises:
comparing a preset defect parameter with the defect parameter of the side surface image;
if consistent, determining the post terminal as unqualified, and removing the battery where the post terminal is located; and
if inconsistent, determining the post terminal as qualified.
